# EUROPEAN PATENT SPECIFICATION

(11) **EP 0 948 119 B1**
(45) Date of publication and mention of the grant of the patent: **02.10.2002**
(21) Application number: 99106570.7
(22) Date of filing: 31.03.1999
(51) Int. Cl.: H02K 49/04

(54) **Eddy current reduction apparatus**
Wirbelstrom Bremsgerät
Appareil de réduction à courant de Foucault

(30) Priority: 02.04.1998 JP 10696398
(43) Date of publication of application: 06.10.1999
(73) Proprietor: ISUZU MOTORS LIMITED, Shinagawa-ku, Tokyo (JP)
(72) Inventor: Kobayashi, Shin Isuzu Advanced, Kanagawa (JP); Narumi, Yukitoshi Isuzu Motors Limited, Kawasaki-shi, Kanagawa (JP)
(74) Representative: Niedmers, Ole, Dipl.-Phys.

(56) References cited:
- EP-A- 0 415 309
- EP-A- 0 497 329

## Description

### Background of the invention

The present invention relates to an eddy current reduction apparatus in which a number of permanent magnets (hereinafter merely referred to as magnets) are disposed with their magnetic poles directed in a peripheral direction of a brake drum, extreme end surfaces of a pair of ferromagnetic members (pole pieces) extending in a peripheral direction and outward in a radial direction from each magnetic pole is opposed to an inner peripheral surface of the brake drum, and effective magnetic circuits are formed between the magnets and the brake drum at the time of braking.

In an eddy current reduction apparatus disclosed in Japanese Patent specification 3086060 (correspondent to EP 456 017) a magnet support tube is reciprocated in an axial direction to thereby switch between braking and non-braking. This has a difficulty in that an axial dimension becomes long by a moving space portion of the magnet support tube.

In an eddy current reduction apparatus disclosed in Japanese Patent specification JP 4012659 (correspondent to EP 416 413) when at the time of braking, a magnet support tube is rotated so that the polarity of magnets of a movable magnet support tube is the same as the polarity of magnets of an immovable magnet support tube, a magnetic circuit is formed which comprises a magnet-ferromagnetic plate (pole piece) - brake drum - ferromagnetic plate - magnet - magnet support tube - original magnet, and when the rotating brake drum crosses the magnetic flux from the magnets of the magnet support tube, a braking force based on an eddy current is generated in the brake drum.

However, in the aforementioned each eddy current reduction apparatus, the magnetic poles of both ends of the magnet are directed in a diametral direction of the brake drum. It is necessary to process the outer surface of the magnet opposed to the ferromagnetic plate and the inner surface superposed to the magnet support tube into a cylindrical surface so that the magnetic flux from the magnets may effectively enter the brake drum via the ferromagnetic plate, it makes the processing cost considerably increase. Further, since at the time of braking, the magnetic circuit comprises a magnet - ferromagnetic plate-brake drum - ferromagnetic plate - magnet - magnet support tube-original magnet, much magnetic flux leaks so that the quantity of the magnetic flux which effectively exerts on the brake drum form the magnets is less. Particularly, for introducing the magnetic flux from the magnets into the brake drum, the ferromagnetic plate is so large as to cover the magnets, and even so, the magnetic flux density cannot be effectively enhanced by the ferromagnetic plate, failing to fully generate the braking force.

In view of the aforementioned problem, it is an object of the present invention to provide an eddy current reduction apparatus in which effective magnetic circuits are formed relative to a brake drum by a combination of block-like (such as a rectangular parallelepiped) magnets which are simple in shape and ferromagnetic members.

### SUMMARY OF THE INVENTION

For solving the above-described problem, the present invention provides the constitution characterized in that a guide tube formed of a non-magnetic material is coaxially disposed in a brake drum coupled to a rotational shaft, a magnet support tube formed of a non-magnetic material is supported axially movably on said guide tube, a number of permanent magnets are supported at peripherally equal intervals on an outer peripheral wall of said magnet support tube, proximal surfaces of a pair of ferromagnetic members are opposed to magnetic pole surfaces of the opposite ends in a peripheral direction of each permanent magnet, extreme ends of said ferromagnetic members are supported on a wall portion of said guide tube close to the inner peripheral surface of the brake drum, and actuators are provided for reciprocating said magnet support tube between a braking position in which the magnetic pole surfaces of the opposite ends of said permanent magnet are opposed to the proximal surfaces of said pair of ferromagnetic members and a non-braking position in which the magnetic pole surfaces of the opposite ends of said permanent magnet are withdrawn from the proximal surfaces of said pair of ferromagnetic members.

Further, the constitution of the present invention is characterized in that a guide tube in the form of a box in section formed of a non-magnetic material is coaxially disposed in a brake drum coupled to a rotational shaft, a magnet support tube formed of a non-magnetic material is supported axially movably on said guide tube, a number of permanent magnets are supported at peripherally equal intervals on an outer peripheral wall of said magnet support tube, proximal surfaces of a pair of ferromagnetic members are coupled to magnetic pole surfaces of the opposite ends in a peripheral direction of each permanent magnet, and actuators are provided to reciprocate said magnet support tube between a braking position in which the extreme end surfaces of said ferromagnetic members are opposed to the inner peripheral surface of the brake drum and a non-braking position in which said ferromagnetic members are withdrawn to the exterior of the brake drum.

The present invention provides the constitution in which magnets are supported on a magnet support tube with magnetic poles of the opposite ends directed in a peripheral direction, and each ferromagnetic member (pole piece, magnetic member may be employed) has a proximal end coupled to one of the magnetic pole surfaces of the magnet and an extreme end extending in a peripheral direction and outward in a diametral direction from the magnetic pole surfaces of the magnet. That is, proximal surface of the ferromagnetic member is coupled or opposed to one end surface in a peripheral direction of the magnet, and extreme end surface of the ferromagnetic member is opposed to the inner peripheral surface of the brake drum. The magnet support tube is supported axially movably on the guide tube. Preferably, the extreme end surface of the ferromagnetic member is covered by an outer tube portion of an extremely thin guide tube formed of a non-magnetic material or extends through the outer tube portion and directly opposed to the inner peripheral surface of the brake drum.

At the time of braking, when the magnet support tube is forced into the brake drum along the guide tube by the actuator, the extreme end surface of the ferromagnetic member is opposed to the inner peripheral surface of the brake drum. When the rotating brake drum crosses the magnetic flux from the magnets of the magnet support tube to the inner peripheral surface of the brake drum via the ferromagnetic members, the braking force due to the eddy current is generated in the brake drum. At the time of non-braking, when the magnetic support tube is drawn outside the brake drum by the actuator, the magnets exert no magnetic flux on the brake drum, and the braking force is not generated.

### BRIEF DESCRIPTION OF THE DRAWINGS

These and other objects and features of the invention will become more apparent upon a perusal of the following description taken in conjunction with the accompanying drawings wherein:
FIG. 1 is a front sectional view of an eddy current reduction apparatus according to a first embodiment.
FIG. 2 is a front sectional view showing main parts of the eddy current reduction apparatus.
FIG. 3 is a side sectional view showing the braking state of the eddy current reduction apparatus .
FIG. 4 is a side sectional view showing the braking state of the eddy current reduction apparatus according to a partly modified embodiment of the present invention.
FIG. 5 is a side sectional view showing the braking state of the eddy current reduction apparatus according to a second embodiment of the present invention.
FIG. 6 is a front sectional view showing main parts of an eddy current reduction apparatus.

### DESCRIPTION OF THE PREFERRED EMBODIMENTS

In the eddy current reduction apparatus, a brake drum 13 is coupled to a rotational shaft 4. To accomplish this, a mounting flange 5 having a spline hole 5a is fitted in the output rotational shaft 4 which is supported by a bearing 3 on the end wall of a gear box 2 of a speed change gear and projects from the end wall, and is fastened by a nut 6 so as not to be slipped out. The end wall of a brake drum 7 of a parking brake and a flange portion 9a integral with a wheel 9 for supporting the brake drum 13 of the eddy current reduction apparatus are superposed to the mounting flange 5 and fastened by a plurality of bolts 10 and nuts 10a.

The brake drum 13 is formed of a material having a large permeability such as iron, and a number of cooling fins 13a are provided at peripherally equal intervals on the outer peripheral wall. As will be described later, the proximal end of the brake drum 13 is coupled to a number of supporting arms (spokes) 12 fitted in the wheel 9 and extending in a radial direction from the wheel 9. Interior of the brake drum 13 is coaxially disposed a guide tube 18 having a hollow portion 23 in the form of a box in section. The immovable guide tube 18 formed of a non-magnetic material such as aluminum is secured by means of a plurality of bolts 32, 33 to a frame plate 31 which is secured to a projecting wall 2a of a gear box 2. The guide tube 18 is constituted by coupling annular end wall plates 18c, 18d to both ends of an outer tube portion 18a and an inner tube portion 18b. In the illustrated embodiment, a left half portion of the outer tube portion 18a, the end wall plate 18c and the inner tube portion 18b are preferably integrally constituted from a magnetic material, as a tube body in the C-shape in section, and a right half portion of the outer tube portion 18a and the end wall plate 18d are integrally constituted from a non-magnetic material as a tube body in the L-shape in section, both of which are connected by a number of bolts 14.

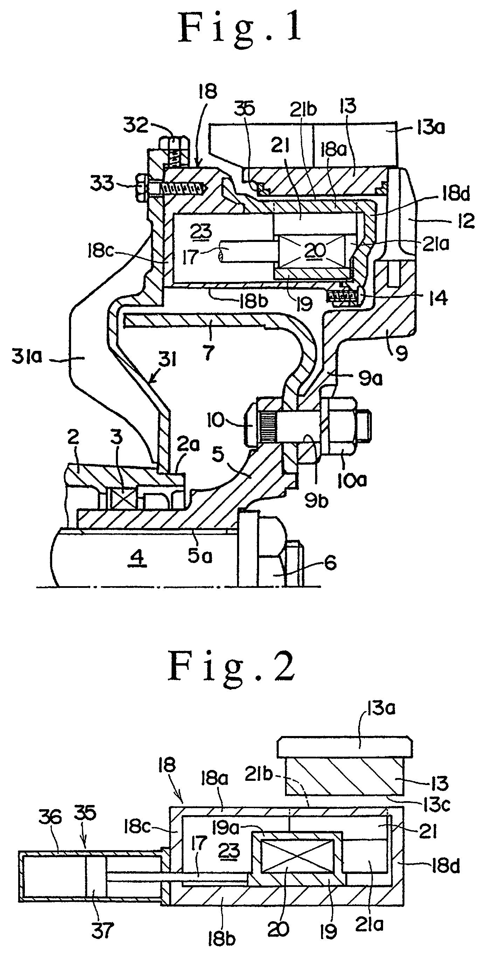

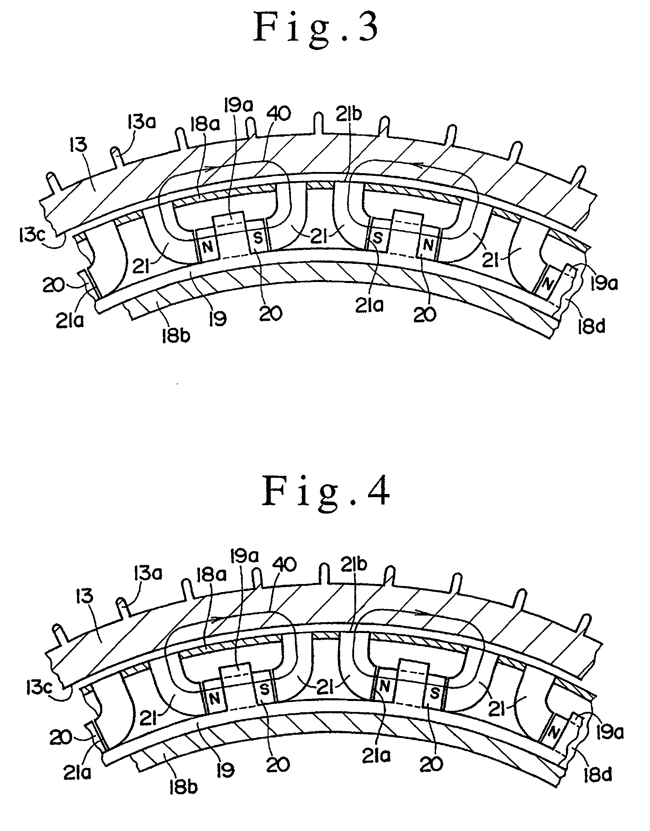

A magnet support tube 19 formed of a non-magnetic material is stored in a hollow portion 23 of the guide tube 18. The magnet support tube 19 is supported axially movably on the inner tube portion 18b, and a number of magnets 20 are supported on the outer peripheral wall of the guide tube 18 at peripherally equal intervals. The block-like magnet 20 is fitted and supported in a peripheral opening in the shape of a rectangle in section of a fastening member 19a (FIG. 2) formed integral with the magnet support tube 19. The magnets 20 of the magnet support tube 19 are preferably disposed so that polarities of magnetic poles opposed to each other of a pair of magnets 20 in a peripheral direction are the same, as shown in FIG. 3. Proximal surfaces 21a of a pair of bended ferromagnetic members (pole pieces) 21 are opposed to magnetic pole surfaces of the opposite ends in a peripheral direction of the magnet 20.

The ferromagnetic member 21 is curved or bended diametral outward and extends through the outer tube portion 18a, and the extreme end surface 21b thereof is opposed to the inner peripheral surface 13c of the brake drum 13. Actually, in casting the right half portion of the outer tube portion 18a and the end wall plate 18d from a non-magnetic material such as aluminum as a tube body in the L-shape in section, the extreme end portion of the ferromagnetic member 21 is cast within the outer tube portion 18a. The magnet 20 and a pair of ferromagnetic members 21 are substantially in the form of a horse-shoe. The magnets 20 are supported on the magnet support tube 19 and the ferromagnetic members 21 are supported on the immovable outer tube portion 18a as described above. In the illustrated embodiment, the width of the ferromagnetic members 21 (axial dimension of the brake drum 13) are the same as or somewhat wider than that of the magnets 20.

As shown in FIG. 1, a plurality of actuators 35 (FIG. 2) are supported at peripherally equal intervals on the end wall plate 18c together with the frame plate 31 having a reinforcing rib 31a. In the actuator 35, a piston 37 is fitted in a cylinder 36 to define a pair of fluid pressure chambers, and a rod 17 which projects toward the hollow portion 23 via a slit of the end wall plate 18c from the piston 37 is connected to the magnet support tube 19.

As shown in FIGS. 1 and 3, at the time of braking, the magnet support tube 19 projects into the brake drum 13, and the magnets 20 are on between the proximal surfaces 21 of a pair of ferromagnetic members 21 supported on the outer tube portion 18a. When the rotating brake drum 13 crosses the magnetic fluxs from the magnets 20 which exert on the inner peripheral surface 13c of the brake drum 13 via the ferromagnetic members 21, eddy currents are generated in the brake drum 13, and a braking force (a braking torque) is generated in the brake drum 13. At that time, a magnetic circuit 40 is formed in the magnet 20, a pair of ferromagnetic members 21 and the brake drum 13, as shown in FIG. 3.

At the time of braking, since the ferromagnetic member 21 extending through the outer tube portion 18a is directly opposed to the inner peripheral surface 13c of the brake drum 13, the magnetic flux less leaks, and a great braking force is obtained. In the case of arrangement in which polarities of ends opposed to a pair of magnets 20 adjacent to each other in a peripheral direction are different, a leak of magnetic flux between the ends opposed to each other of the magnets 20, not reaching the brake drum 13, occurs (a short-circuiting magnetic circuit occurs) so that the braking force is apt to be weakened. However, in the present embodiment, since the polarities of the ends opposed to each other of a pair of magnets 20 are the same, no inconvenience as noted above occurs, which is more preferable.

At the time of non-braking, when the magnet support tube 19 is drawn out of the brake drum 13 along the guide tube 18 by the actuators 35 (FIG. 2 shows the state in which the magnet support tube 19 is drawn out halfway), the magnets 20 exert no magnetic flux on the brake drum 13, and the braking force is not generated in the brake drum 13.

The embodiment shown in FIG. 4 is merely different form those shown in FIGS. 1 to 3 in that the polarities of the ends opposed to each other of a pair of magnets 20 adjacent to each other in a peripheral direction are different, and are similar in other constitutions to those shown in FIGS. 1 to 3. In this embodiment, the mutual spacing in a peripheral direction of the magnets 20, more specifically, the mutual spacing in a peripheral direction of the ferromagnetic members 21 close to the ends opposed to each other of a pair of magnets 20 adjacent to each other can be made larger to suppress an occurrence of a leak of magnetic flux between the ends opposed to each other of the magnets 20, not reaching the brake drum 13, at the time of braking.

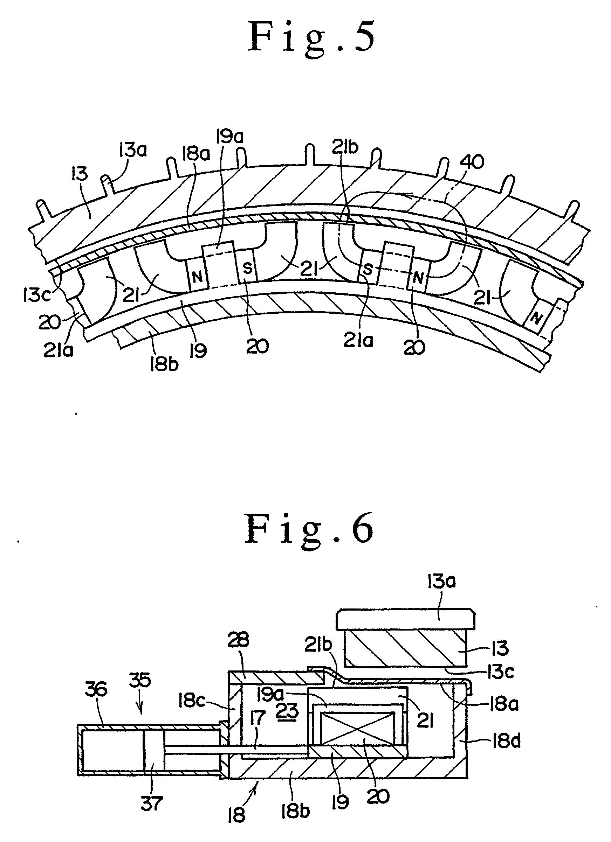

In the embodiments shown in FIGS. 5 and 6, the guide tube 18 defines a hollow portion 23 in the form of a rectangle in section by end wall plates 18c, 18d formed of a non-magnetic material, an inner tube portion 18b formed of a non-magnetic material, a left half yoke tube 28 formed of a magnetic material, and a right half outer tube portion 18a formed from a thin stainless steel sheet as a non-magnetic material. A magnet support tube 19 formed of a non-magnetic material is supported axially movably in the hollow portion 23 of the guide tube 18. A number of fastening members 19a are integrally formed at peripherally equal intervals on the outer peripheral wall of the magnet support tube 19, and the magnet 20 is fitted and supported in a peripheral opening in the shape of a rectangle in section of each fastening member 19a. A proximal surfaces 21a of a pair of bended ferromagnetic members 21 are coupled to the magnetic pole surfaces of the opposite ends in a peripheral direction of each magnet 20. The ferromagnetic member 21 is bended in a peripheral direction and then diametral outward from the magnetic pole surface of one end of the magnet 20. The extreme end surface 21b of the ferromagnetic member 21 is constituted to be opposed to the inner peripheral surface 13c of the brake drum 13 through the outer tube portion 18a. The magnets 20 and a pair of ferromagnetic members 21 are combined substantially in the form of a horse-shoe. Other constitutions are similar to those of the embodiments shown in FIGS. 1 to 3.

At the time of braking, when the magnet support tube 19 is moved rightward from the position shown in FIG. 6, the magnet support tube 19 is on the interior of the brake drum 13, the extreme end surfaces 21b of the ferromagnetic members 21 extending from the magnet 20 are opposed to the inner peripheral surface 13c of the brake drum 13 via the ferromagnetic members 21, the magnetic circuits 40 are formed in the magnets 20, the pair of ferromagnetic members 21 and the brake drum 13, eddy currents are generated in the brake drum 13, and a braking force is generated in the brake drum 13.

At the time of non-braking, when the magnet support tube 19 is moved leftward from the position shown in FIG. 6, the extreme end surfaces 21b of the ferromagnetic members 21 are opposed to the inner peripheral surface of the yoke tube 28, and short-circuiting magnetic circuits are formed in the magnets 20, pair of ferromagnetic members 21 and the yoke tube 28. The outer tube portion 18a prevents dust and muddy water from entering the hollow portion 23 from the outside, and the wall-thickness thereof can be made thin to thereby make the extreme end surface 21b of the ferromagnetic members 21 closer to the inner peripheral surface 13c of the brake drum 13 to make high the density of magnetic flux reaching the brake drum 13 via the ferromagnetic member 21 and the outer tube portion 18a from the magnets 20. In the present embodiment, since it is not necessary to cast the end of the ferromagnetic members 21 into the outer tube portion 18a of the guide tube 18, manufacturing can be simplified.

Obviously, many modifications and variations of the present invention are possible in right of the above teachings. It is to be understood, therefore, that the invention can be practiced otherwise than as specifically described.

As described above, in the present invention, the block-like magnets are supported on the magnet support tube with the magnetic poles on the opposite ends directed in a peripheral direction, the ferromagnetic member extending in a peripheral direction and then diametral outward from the magnetic pole surface of the magnet has a proximal end coupled to or opposed to the magnetic pole surface on one end of the magnet and a extreme end opposed to the inner peripheral surface of the brake drum. The shape of the magnets is simplified whereby the manufacturing cost can be reduced.

The opposite ends of the block-like magnet coupled to the outer peripheral wall of the magnet support tube is placed between a pair of ferromagnetic members coupled to the immovable guide tube to constitute a combination whereby the magnetic flux from the magnet is introduced into the brake drum via a pair of bended ferromagnetic members. Therefore, the magnetic fluxs less leak, the magnetic flux density effectively exerting on the brake drum can be made high, the effective magnetic circuits are formed relative to the brake drum, and a great braking force is obtained.

The extreme end portion of the ferromagnetic member is covered by the outer tube portion of an extremely thin guide tube formed of a non-magnetic material or the extreme end portion of the ferromagnetic member is extended through and supported on the outer tube portion and comes closer to the inner peripheral surface of the brake drum. Therefore, the density of the magnetic fluxs exerting on the brake drum via the ferromagnetic members and the outer tube portion from the magnets can be made high.

Since the magnet support tube for supporting the block-like magnets can be formed of a non-magnetic material, assembling of the magnet support tube and the magnets is facilitated, and the magnet support tube is light-weighted. Therefore, the capacity of the actuator for driving the magnet support tube can be reduced.

Since the magnets having the magnetic poles on the peripheral ends are used, the magnetic fluxs from the magnets does not flow to the magnet support tube as in the conventional apparatus but is effectively introduced to the brake drum. The magnetic circuit is formed magnet - ferromagnetic member - brake drum-ferromagnetic member - magnet. Therefore, the magnet support tube as in the conventional apparatus is not necessary, the construction is simple, and the light-weighting becomes enabled.

A pair of ferromagnetic members are joined to the peripheral ends of the magnets. With this construction, if the volume and the number of magnets are the same, the number of ferromagnetic members (magnetic poles) opposed to the inner peripheral surface of the brake drum is twice, enabling the enhancement of the braking force. Conversely, if the same braking performance as that of the conventional apparatus will be satisfied, the number of magnets can be reduced substantially to half, thus reducing the manufacturing cost.

Further, if the polarities of the ends opposed to each other of a pair of magnets are the same, the leak of magnetic flux between the magnets can be reduced, thus being possible to obtain a greater braking force.
- 2:: gear box
- 2a:: projecting wall
- 3:: bearing
- 4:: rotational shaft
- 5:: mounting flange
- 5a:: spline hole
- 6:: nut
- 7:: brake drum
- 9:: wheel
- 9a:: flange portion
- 10:: bolt
- 10a:: nut
- 12:: support arm
- 13:: brake drum
- 13a:: cooling fin
- 13c:: inner peripheral surface
- 14:: bolt
- 17:: rod
- 18:: guide tube
- 18a:: outer tube portion
- 18b:: inner tube portion
- 18c:: end wall plate
- 18d:: end wall plate
- 19:: magnet support tube
- 19a:: fastening member
- 20:: permanent magnet
- 21:: ferromagnetic member
- 21a:: proximal surface
- 21b:: extreme end surface
- 23:: hollow portion
- 28:: yoke tube
- 31:: frame plate
- 31a:: reinforcing rib
- 32:: bolt
- 33:: bolt
- 35:: actuator
- 36:: cylinder
- 37:: piston
- 40:: magnetic circuit

## Claims

1. An eddy current reduction apparatus **characterised in that** a guide tube (18) formed of a non-magnetic material is coaxially disposed in a brake drum (13) coupled to a rotational shaft (4), a magnet support tube (19) formed of a non-magnetic material is supported axially movable on said guide tube (18), a number of permanent magnets (20) are supported at peripherally equal intervals on an outer peripheral wall of said magnet support tube (19), proximal surfaces of a pair of ferromagnetic members (21) are opposed to magnetic pole surfaces of the opposite ends in a peripheral direction of each permanent magnet (20), extreme ends of said ferromagnetic members (21) are supported on a wall portion of said guide tube (18) close to the inner peripheral surface of the brake drum (13), and actuators (35) are provided for reciprocating said magnet support tube (19) between a braking position in which the magnetic pole surfaces of the opposite ends of said permanent magnet (20) are opposed to the proximal surfaces (21a) of said pair of ferromagnetic members (21) and a non-braking position in which the magnetic pole surfaces of the opposite ends of said permanent magnet (20) are withdrawn from the proximal surfaces (21a) of said pair of ferromagnetic members (21).

2. An eddy current reduction apparatus **characterised in that** a guide tube (18) in the form of a box in section formed of a non-magnetic material is coaxially disposed in a brake drum (13) coupled to a rotational shaft (4), a magnet support tube (19) formed of a non-magnetic material is supported axially movably within said guide tube (18), a number of permanent magnets (20) are supported at peripherally equal intervals on an outer peripheral wall of said magnet support tube (19), proximal surfaces of a pair of ferromagnetic members (21) are coupled to magnetic pole surfaces of the opposite ends in a peripheral direction of each permanent magnet (20), and actuators (35) are provided for reciprocating said magnet support tube (19) between a braking position in which the extreme end surfaces of said pair of ferromagnetic members (21) are opposed to the inner peripheral surface of the brake drum (13) and a non-braking position in which said pair of ferromagnetic members (21) are withdrawn to the exterior of the brake drum (13).

3. The eddy current reduction apparatus according to claims 1 and 2, wherein polarities of opposed ends of a pair of magnets (20) peripherally adjacent to each other are the same.

4. The eddy current reduction apparatus according to claim 2, wherein said guide tube (18) is in the form of a box in section, and a half portion of an outer tube portion of said guide tube (18) on the interior of the brake drum (13) is formed of a non-magnetic material such as a thin stainless steel sheet, while a half portion projecting the exterior of the brake drum (13) is formed of a magnetic material.

## Patentansprüche

1. Wirbelstrom-Bremsgerät, **dadurch gekennzeichnet, daß** ein aus nichtmagnetischem Werkstoff gebildetes Führungsrohr (18) koaxial in einer Bremstrommel (13) angeordnet ist, die mit einer drehbaren Welle (4) gekoppelt ist, daß ein aus nichtmagnetischem Werkstoff gebildetes Magnettragrohr (19) axial beweglich auf dem Führungsrohr (18) gelagert ist, daß eine Anzahl Permanentmagnete (20) in über den Umfang verteilten gleichen Abständen auf einer äußeren Umfangswandung des Magnettragrohres (19) abgestützt ist, daß nach innen zu bzw. proximal liegende Oberflächen eines Paares von ferromagnetischen Teilen (21) den Magnetpolflächen der gegenüberliegenden Enden in Umfangsrichtung jedes Permanentmagneten gegenüber liegen, daß am weitesten außen liegende Enden der ferromagnetischen Teile (21) auf einem Wandungsabschnitt des Führungsrohres (18) nahe der inneren Umfangsfläche der Bremstrommel (13) gelagert sind, und daß zum Hin- und Herbewegen des Magnettragrohres (19) zwischen einer Bremsstellung, in welcher die Magnetpolflächen der gegenüber liegenden Enden der Permanentmagnete (20) den nach innen zu liegenden Flächen (21a) des Paares von ferromagnetischen Teilen (21) gegenüber liegen, und einer Bremslösestellung, in welcher die Magnetpolflächen der gegenüber liegenden Enden des Permanentmagneten (20) von den nach innen zu liegenden Flächen (21a) des Paares von ferromagnetischen Teilen (21) Betätigungselemente (35) vorgesehen sind.

2. Wirbelstrom-Bremsgerät, **dadurch gekennzeichnet, daß** ein aus nichtmagnetischem Werkstoff gebildetes Führungsrohr mit kastenförmigem Querschnitt koaxial in einer Bremstrommel (13) angeordnet ist, die mit einer drehbaren Welle (4) gekoppelt ist, daß ein aus nichtmagnetischem Werkstoff gebildetes Magnettragrohr (19) axial beweglich im Inneren des Führungsrohres (18) gelagert ist, daß eine Anzahl von Permanentmagneten (20) in über den Umfang verteilten gleichen Abständen auf einer äußeren Umfangswandung des Magnettragrohres (19) abgestützt ist, daß nach innen zu bzw. proximal liegende Oberflächen eines Paares von ferromagnetischen Teilen (21) mit Magnetpolflächen der gegenüberliegenden Enden in Umfangsrichtung jedes Permanentmagneten gekoppelt sind, gegenüber liegen, und daß zum Hin- und Herbewegen des Magnettragrohres (19) zwischen einer Bremsstellung, in welcher die am weitesten außen liegenden Endflächen des Paares von ferromagnetischen Teilen (21) der innen liegenden Umfangsfläche der Bremstrommel (13) gegenüber liegen, und einer Bremslösestellung, in welcher das Paar von ferromagnetischen Teilen (21) zur Außenseite der Bremstrommel (13) hin zurückgezogen ist, Betätigungselemente (35) vorgesehen sind.

3. Wirbelstrom-Bremsgerät nach den Ansprüchen 1 und 2, bei welcher die Polaritäten einander gegenüber liegender Enden eines Paares von in Umfangsrichtung einander benachbarten Magneten (20) gleich sind.

4. Wirbelstrom-Bremsgerät nach Anspruch 2, bei welcher das Führungsrohr (18) einen kastenförmigen Querschnitt aufweist, und bei welcher ein halber Abschnitt eines äußeren Rohrabschnitts des Führungsrohres (18) auf der Innenseite der Bremstrommel (13) aus einem nichtmagnetischen Werkstoff wie beispielsweise einem dünnen Edelstahlblech gebildet ist, wohingegen ein zur Außenseite der Bremstrommel (13) vorstehender halber Abschnitt aus magnetischem Werkstoff gebildet ist.

## Revendications

1. Appareil de freinage à courants de Foucault, **caractérisé par le fait qu'**un tube de guidage (18) en matériau non-magnétique est déposé coaxialement dans un tambour de frein (13) couplé à un arbre rotatif (4), un tube support d'aimants (19) en matériau non-magnétique est porté mobile axialement par le tube de guidage (18), une pluralité d'aimants permanents (20) est portée, à intervalles périphériques égaux, par une paroi périphérique externe du tube support d'aimants (19), des surfaces proximales d'une paire d'éléments ferromagnétiques (21) sont opposées à des surfaces polaires magnétiques des extrémités opposées dans une direction périphérique de chaque aimant permanent (20), des extrémités des éléments ferromagnétiques (21) sont portées par une partie de paroi du tube de guidage (18) proche de la surface périphérique interne du tambour de frein (13), et des actionneurs (35) sont prévus pour faire aller et venir le tube support d'aimants (19) entre une position de freinage, dans laquelle les surfaces polaires magnétiques des extrémités opposées de l'aimant permanent (20) sont opposées aux surfaces proximales (21a) de la paire l'éléments ferromagnétiques (21), et une position de non-freinage, dans laquelle les surfaces polaires magnétiques des extrémités opposées de l'aimant permanent (20) sont écartées des surfaces proximales (21a) de la paire l'éléments ferromagnétiques (21).

2. Appareil de freinage à courants de Foucault, **caractérisé par le fait qu'**un tube de guidage (18) à section en forme de boîte en matériau non-magnétique est déposé coaxialement dans un tambour de frein (13) couplé à un arbre rotatif (4), un tube support d'aimants (19) en matériau non-magnétique est porté mobile axialement par le tube de guidage (18), une pluralité d'aimants permanents (20) est portée, à intervalles périphériques égaux, par une paroi périphérique externe du tube support magnétique (19), des surfaces proximales d'une paire d'éléments ferromagnétiques (21) sont couplées à des surfaces polaires magnétiques des extrémités opposées dans une direction périphérique de chaque aimant permanent (20), et des actionneurs (35) sont prévus pour faire aller et venir le tube support (19) entre une position de freinage, dans laquelle les surfaces d'extrémité de la paire d'éléments ferromagnétiques (21) sont opposées à la surface périphérique interne du tambour de frein (13), et une position de non-freinage, dans laquelle la paire d'éléments ferromagnétiques (21) est écartée à l'extérieur du tambour de frein (13).

3. Appareil de freinage à courants de Foucault selon l'une des revendications 1 et 2, dans lequel les polarités des extrémités opposées d'une paire d'aimants (20) mutuellement adjacentes périphériquement sont les mêmes.

4. Appareil de réduction de vitesse à courants de Foucault selon la revendication 2, dans lequel le tube de guidage (18) présente une section en forme de boîte, et une moitié d'une partie de tube externe du tube de guidage (18) sur l'intérieur du tambour de frein (13) est en matériau non-magnétique tel qu'une mince feuille d'acier inoxydable, alors qu'une moitié faisant saillie à l'extérieur du tambour de frein (13) est en matériau magnétique.
